Europäisches Patentamt

European Patent Office

Office européen des brevets

(11) Veröffentlichungsnummer: **0 169 370**
**A1**

(12) # EUROPÄISCHE PATENTANMELDUNG

(21) Anmeldenummer: 85107514.3

(22) Anmeldetag: 18.06.85

(51) Int. Cl.⁴: **A 47 J 41/00**
F 25 D 3/08, A 45 C 11/20

(30) Priorität: 06.07.84 DE 3425017
19.12.84 DE 3446369

(43) Veröffentlichungstag der Anmeldung:
29.01.86 Patentblatt 86/5

(84) Benannte Vertragsstaaten:
AT BE CH DE FR GB IT LI LU NL SE

(71) Anmelder: Rotpunkt Dr. Anso Zimmermann
Industriestrasse
D-6434 Niederaula / Bad Hersfeld(DE)

(72) Erfinder: Zimmermann, Anso, Dr.
Seilerweg 34
D-6430 Bad Hersfeld(DE)

(74) Vertreter: Körber, Wolfhart, Dr. et al,
Patentanwälte Dipl.-Ing. H. Mitscherlich Dipl.-Ing. K.
Gunschmann Dr.rer.nat. W. Körber Dipl.Ing. J.
Schmidt-Evers Dipl.-Ing. W. Melzer Steinsdorfstrasse 10
D-8000 München 22(DE)

(54) Gefäss zum Kühlen oder Warmhalten von im Gefäss aufzunehmendem Gut.

(57) Es wird ein Gefäß (1) zum Kühlen oder Warmhalten von
in dem Gefäß (1) aufzunehmendem Gut beschrieben. In das
Gefäß (1) ist ein Kühlakku (4) einsetzbar. Der Kühlakku (4) ist
dabei der Mantelform des inneren Behälters (3) angepaßt.

FIG.1

EP 0 169 370 A1

**Gefäß zum Kühlen oder Warmhalten von im Gefäß aufzunehmendem Gut**

Die Erfindung bezieht sich auf ein Gefäß nach dem Oberbegriff des Anspruchs 1.

Ein Gefäß dieser Gattung ist allgemein bekannt, z.B. als Kühlgefäß für kühl zu haltendes Gut, z.B. Lebensmittel.

Bei der bekannten Bauart werden das zu kühlende Gut und wenigstens ein Kühlakku in den Aufnahmeraum des Gefäßes eingesetzt. Dabei ist es nicht möglich, dem zu kühlenden Gut und dem Kühlakku eine geordnete Position zueinander zu geben. Dies führt zum einen dazu, daß das zu kühlende Gut und der Kühlakku sich gegenseitig formschlüssig derart sperren, daß eine gezielte Entnahme entweder des zu kühlenden Gutes oder des Kühlakkus nicht möglich ist. Um eines dieser beiden Gegenstände aus- oder einzupacken, bedarf es eines Zurechtrückens oder sogar einer Herausnahme eines oder beider Gegenstände. Andererseits ist der Kühlakku im Aufnahmeraum örtlich nicht fixiert, so daß bei der Handhabung des Gefäßes ein gegenseitiges Verrutschen des Kühlakkus und des zu kühlenden Gutes zu erwarten ist, wodurch eine weitere Ursache des vorgenannten Mangels gegeben ist.

Der Erfindung liegt die Aufgabe zugrunde, ein Gefäß der eingangs bezeichneten Gattung so auszugestalten, daß bei einfacher Handhabung beim Einsetzen und Herausnehmen des Akkus und des Gutes eine geordnete Positionierung des Akkus und des Gutes im Aufnahmeraum möglich ist.

Diese Aufgabe wird durch die Merkmale des Anspruchs 1 gelöst.

Der wesentliche Vorteil der Erfindung besteht darin, daß der Akku im Aufnahmeraum fixiert ist und sowohl der Akku als auch das Gut, insbesondere dann, wenn dieses einstückige Form hat, wie z.B. eine Flasche, wahlweise aus dem Aufnahmeraum herausgenommen bzw. eingesetzt werden kann, ohne daß es besonderer Ordnungs- bzw. Stützungsmaßnahmen bedarf. Deshalb eignet sich die erfinderische Ausgestaltung auch besonders für Speise- und Trinkgefäße, weil der Akku mit der Speise oder dem Getränk nicht in Kontakt steht und wahlweise problemlos ausgetauscht werden kann.

Die Ausgestaltungen nach den Ansprüchen 2 bis 4 führen zu großen Anlageflächen, so daß eine intensive Wärmeabgabe bzw. -aufnahme erfolgt. Bei der Ausgestaltung nach Anspruch 3 wird die gesamte Querschnittsfläche des Aufnahmeraumes genutzt. Gemäß Anspruch 4 ist dabei die Kapazität des Akkus aufgrund Raumausnutzung im Freiraum maximal.

Die Ausbildung nach Anspruch 5 ist deshalb vorteilhaft, weil der Behälter herausnehmbar ist und deshalb die Handhabung auch im Hinblick auf die Reinigungspflege verbessert ist. Dabei ist gemäß Anspruch 6 die Fixierung des Behälters im Gehäuse gewährleistet.

Eine einstückige Ausbildung des Gehäuses samt Behälter ist gemäß Anspruch 7 möglich.

Die im Anspruch 8 enthaltenen Merkmale führen zu einer vergrößerten Anlagefläche. Infolgedessen ist auch das Verhältnis der im Bereich dieser Anlagefläche übertragenen Energie im Vergleich zu der von der übrigen Oberfläche des Akkus abgegebenen Energie entsprechend größer. D.h., der Energietransfer zwischen dem Akku und dem Gut erfolgt verlustärmer. Dabei ist nicht nur eine verlustärmere Übertragung der Energie möglich, sondern auch eine schnellere Übertragung, weil eine verhältnismäßig große Übertragungsfläche zur Verfügung steht. Dabei eignet sich die erfindungsgemäße Ausgestaltung nicht nur für eine zylinderförmige Anlagefläche, sondern auch für ebene Anlageflächen. Im ersteren Fall übergreift der erfindungsgemäß ausgestaltete Akku das Gut oder den Behälter U-förmig, wenn die Anlagefläche zurückspringt oder konkav ist oder er faßt in das Gut oder in den Behälter ein, wenn die Anlagefläche vorspringt oder konvex ist. Von besonderem Vorteil ist aus zweckmäßigen Gründen eine gewölbte Mantelfläche bzw. runde Querschnittsform des Behälters.

Die im Anspruch 9 enthaltenen Ausgestaltungsmerkmale eignen sich aus Handhabungsgründen ebenfalls insbesondere für Speisegefäße (ovale Behälter) und Trinkgefäße (runde Behälter).

Die Ausführungsform nach Anspruch 1o führt zu dem Vorteil, daß der Akku sowohl mit der einen als auch mit der anderen Stirnseite in den Freiraum eingeführt werden kann.

Die in den Ansprüchen 11 und 12 enthaltenen Merkmale ermöglichen es bei Wahrung der durch die erfindungsgemäße Ausgestaltung erzielbaren Vorteile, den Akku zwischen zwei oder mehreren Behältern anzuordnen. Zum Anspruch 11 wird auf die zum Anspruch 7 schon erwähnten Vorteile verwiesen.

Die Ausgestaltung nach Anspruch 13 ermöglicht insbesondere in den Fällen, in denen der Akku zwischen zwei oder mehr (sternförmig angeordneten) Behältern eingesetzt ist, den Akku aus zwei zwischen den Anlageflächen geteilten identischen Akkuteilen zu bilden. Diese Ausgestaltung hat zum einen den Vorteil, daß die Akkuteile aufgrund ihrer im Verhältnis größeren Oberfläche schneller aufladbar sind und zum anderen separate, kleine Akkus darstellen, die auch für andere Kühl- oder Warmhaltezwecke benutzt werden können.

Wenn das Gehäuse des Gefäßes gemäß Anspruch 14 aus Kunststoff besteht, läßt sich das Gehäuse einfach und preiswert herstellen, wobei bei der Verwendung eines normalen Kunststoffes ohne besondere wärmedämmende Wirkung die Wärmedämmung durch zusätzliche innere oder äußere Isolierungsmaßnahmen erreicht werden kann.

Die in den Ansprüchen 15 und 16 enthaltenen Ausgestaltungsmerkmale erleichtern das Herausnehmen des Akkus.

Nachfolgend werden zwei Ausführungsbeispiele der Erfindung anhand einer vereinfachten Zeichnung beschrieben.

Es zeigt

Fig. 1   ein Kühlgefäß mit einem erfindungsgemäß ausgestalteten Akku in der Perspektive als erstes Ausführungsbeispiel;

Fig. 2   eine Vorderansicht im lotrechten Halbschnitt der Anordnung nach Fig. 1;

Fig. 3   eine Draufsicht auf die Anordnung nach Fig. 1;

Fig. 4   ein Akkuteil in der Perspektive;

Fig. 5   ein Kühlgefäß im lotrechten Halbschnitt als zweites Ausführungsbeispiel;

Fig. 6   das Kühlgefäß nach Fig. 5 in der Draufsicht.

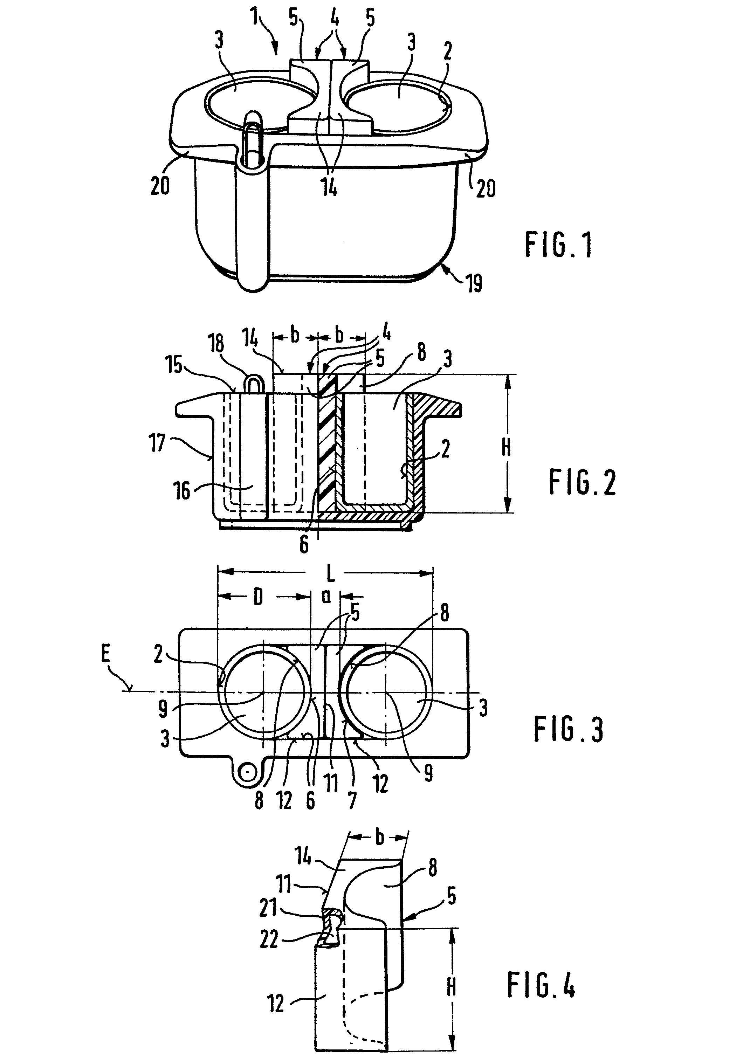

Das in Fig. 1 allgemein mit 1 bezeichnete Kühlgefäß
weist einen in der Draufsicht langlochförmigen Aufnahmeraum 2 für zwei im horizontalen Querschnitt runde Innenbehälter 3 und ein allgemein mit 4 bezeichnetes Kühlakkupaket auf, das aus zwei identischen Kühlakkus 5 zusammengesetzt ist. Die Innenbehälter 3 und die Kühlakkus 5
stehen in eingesetzter Position auf dem Boden des Kühlgefäßes 1 auf. Die in der Draufsicht sichtbare Länge L
des Aufnahmeraumes 2 ist größer bemessen als der doppelte Durchmesser D der Innenbehälter 3, so daß sich zwischen den Innenbehältern 3 ein Abstand a und somit ein
mit 6 bezeichneter Freiraum ergibt. In diesen Freiraum
sind die beiden Kühlakkus 5 eingesetzt, die an den zylindrischen Außenflächen 7 der Innenbehälter 3 angepaßte,
zylindrisch konkave Anlageflächen 8 aufweisen. Die Innenbehälter 3 haben im wesentlichen zylindrische Form. Infolgedessen sind auch die Anlageflächen etwa zylindrisch,
weil sie etwa parallel zu den Mittelachsen 9 der Innenbehälter 3 gerichtet sind. Die übrigen Mantelflächen des
Kühlakkus 5, nämlich die den Anlageflächen 8 entgegengesetzten Rückflächen 11 und die Seitenwände 12 sind
prismatische Flächen, d.h. alle vertikalen Flächen der
Kühlakkus 5 verlaufen etwa parallel zu einer vertikalen
Achse. Die Anordnung ist so getroffen, daß die Innenbehälter 3 und die beiden Kühlakkus 5 den horizontalen
Querschnitt des Aufnahmeraumes 2 ausfüllen, wobei sie ggf.
einzeln von oben mit einem notwendigen Bewegungsspiel
in den Aufnahmeraum 2 einschiebbar und nach oben wieder
herausnehmbar sind.

Die Kühlakkus 5 sind nicht nur symmetrisch zur Symmetrieebene E der Anlageflächen 8, die durch die Mittelachse 9
geht, sondern sie sind auch gleich breit (vergl. b) bemessen, so daß sie nicht nur einander identisch und deshalb gegeneinander austauschbar sind, sondern auch wahlweise mit der einen oder anderen Stirnseite 14 in den
Aufnahmeraum 2 eingesteckt werden können. Die Höhe H der Kühlakkus 5 ist untereinander gleich und etwas größer bemessen als die Tiefe des Aufnahmeraums 2, so daß die Kühlakkus 5 die Oberseite 15 des Kühlgefäßes 1 überragen. Diese Ausgestaltung ermöglicht es, die Kühlakkus 5 an ihrem oberen Ende zu ergreifen, ohne in die Innenbehälter 3 fassen zu müssen, um z.B. diese gemeinsam mit den Kühlakkus 5 herausziehen zu können.

Mit 16 ist ein an die Gehäusewand 17 des Kühlgefäßes 1 einstückig angeformter Köcher bezeichnet, in den ein nur teilweise dargestelltes Besteckteil 18, z.B. eine Eiszange, einsetzbar ist.

Die Innenbehälter 3 können unmittelbar zur Aufnahme von zu kühlendem Gut, z.B. Getränken, dienen. Das vorbeschriebene Ausführungsbeispiel ist auch zum Kühlen von Flaschen geeignet, die in die Innenbehälter 3 einzusetzen sind. Zum Kühlen des nicht dargestellten Gutes bedarf es der sogenannten Ladung des Kühlakkus 5, z.B. in einem Gefrierschrank. Danach werden die Kühlakkus 5 in den Freiraum 6 zwischen die Innenbehälter 3 eingesteckt, wodurch die Innenbehälter 3 gleichzeitig voneinander distanziert werden. Die Kühlakkus 5 tragen somit auch zur Positionierung der Innenbehälter 3 bei. Die von den Kühlakkus 5 gespeicherte Energie wird an die Innenbehälter 3 abgegeben, wobei zum einen aufgrund der verhältnismäßig großen Anlageflächen 8 und zum anderen aufgrund der unmittelbaren Anlage der Kühlakkus 5 an den Innenbehälter 3, eine verlustarme Übertragung der gespeicherten Kälte erfolgen kann. Die Übertragung ist deshalb verlustarm, weil die Größe der Anlageflächen 8 im Vergleich mit der Größe der Seitenwände 12 verhältnismäßig groß ist.

Die becherförmigen Innenbehälter 3 können sowohl aus Kunststoff als auch aus Metall bestehen. Bei der Verwendung von Metall ist aufgrund der besseren Leitfähigkeit eine schnellere Übertragung der gespeicherten Energie möglich, weil ein größerer Teil der Wandung der Innenbehälter 3 in die Übertragung einbezogen wird.

Das Gehäuse des Kühlgefäßes 1 besteht aus einem Kunststoff geringer Wärmeleitfähigkeit, wodurch einem Wärmeaustausch zwischen der freien Umgebung und dem Aufnahmeraum 2 insgesamt entgegengewirkt und deshalb eine verlustarme Übertragung der Kälte ermöglicht wird. Dieser Effekt kann durch eine besondere Isolierung des Gehäuses noch vergrößert werden.

Im Rahmen der Erfindung ist es auch möglich, das Kühlakkupaket 4 einstückig auszuführen. Außerdem ist es möglich, in dem Kühlgefäß nur einen Innenbehälter 3 anzuordnen. In einem solchen Fall kann es ausreichen, nur einen Kühlakku 5 in einem ihn etwa schließend aufnehmenden Freiraum neben dem Innenbehälter 3 einzusetzen oder zwei Kühlakkus 5 in einem im horizontalen Querschnitt quadratischen oder rechteckigen Aufnahmeraum 2 beiderseits des Innenbehälters 3 anzuordnen, so daß das Kühlgefäß 3 zwischen zwei Kühlakkus 5 angeordnet ist. In einem solchen Fall befindet sich etwa die gesamte Mantelfläche des Innenbehälters 3 in Anlage am Kühlakku.

Das mit 19 bezeichnete Gehäuse des Kühlgefäßes 1 ist im horizontalen Querschnitt rechteckförmig und es besteht aus wärmedämmenden Material. Von den Schmalseiten des Gehäuses 19 springen mit der Oberseite etwa abschließende, sich horizontal erstreckende Leisten 20 vor, die Griffleisten bilden. Die Oberseite des Gehäuses 19 ist vom Rand des Aufnahmeraumes 2 ausgehend radial nach außen geneigt bzw. leicht gewölbt, so daß auf die Oberseite ggf. auftropfende Flüssigkeit vom Aufnahmeraum 2 abgeleitet wird.

Im Rahmen der Erfindung ist es auch möglich, das Gehäuse 19 durch ein besonderes Material zu isolieren, z.B. durch eine innen- oder außenseitige Schicht.

Die Kühlakkus 5 bestehen aus einem in bevorzugter Ausgestaltung geblasenen Kunststoffgehäuse 21, in das ein Medium 22 hoher Kältespeicherkapazität eingefüllt wird. Nach der Füllung wird die Füllöffnung verschlossen, z.B. durch einen Stopfen und/oder durch Schweißen.

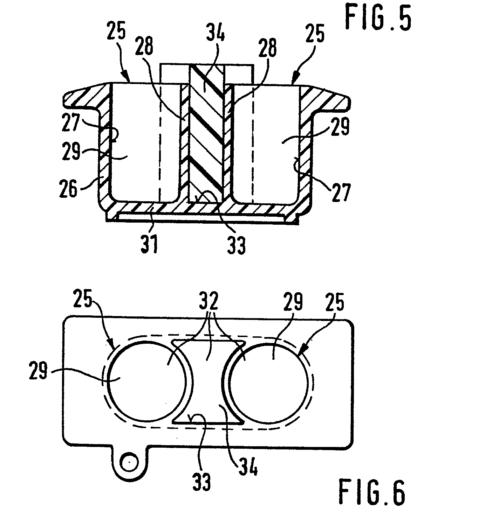

Das zweite Ausführungsbeispiel gemäß Fig. 5 und 6 unterscheidet sich vom ersten dadurch, daß zwei Behälter 25 vorgesehen sind, die fest in das Gehäuse 26 intergriert, d.h., nicht aus dem Gehäuse 26 herausnehmbar sind. Die Behälter 25 werden jeweils hälftig von der Gehäusewand 27 und einer Seitenwand 28 gebildet, die jeweils einen Behälterraum 29 umgeben, wobei aufgrund einer halbzylindrischen Krümmung der Gehäusewand 27 und der Seitenwand 28 sich ein im horinzontalen Querschnitt runder Behälterraum 29 ergibt. Die Seitenwände 28 sind einstückig an die Gehäusewand 27 und dem Gehäuseboden 31 angeformt und tragen deshalb auch zur Versteifung des Gehäuses 26 bei, dessen Aufnahmeraum insgesamt mit 32 bezeichnet ist und die Behälterräume 29 sowie den dazwischen angeordneten Freiraum 33 für den Akku 34 umfaßt.

Der Akku 34 ist im Unterschied zum ersten Ausführungsbeispiel einstückig ausgebildet, weist jedoch prinzipiell die gleiche Form auf.

Im Rahmen der Erfindung ist es möglich und vorteilhaft, den Freiräume und auch die Behälterräume so auszugestalten, daß sie aufwärts geringfügig divergieren. Dies kann in einfacher Weise durch aufwärts schräg nach außen geringfügig geneigte Seitenwände bzw. Gehäusewände erreicht werden, wobei die Anlageflächen des Akkus und die Seitenwände der einzusetzenden Behälter entsprechend zu neigen sind. Eine solche Ausgestaltung ist deshalb vorteilhaft, weil sich schon nach geringfügigem Anheben des Akkus oder betreffenden Behälters ein vermehrtes Spiel im Freiraum bzw. im Behälterraum ergibt, der das Einsetzen und Herausnehmen des Akkus bzw. Behälters erleichtert. Im Rahmen der Erfindung sind auch andere als zylindrische Formen der dem Akku zugewandten Seitenwände der Behälter möglich, z.B. ebene oder gegeneinander schräg verlaufende Seitenwandabschnitte. Für ein Speisegefäß eignen sich insbesondere Behälter mit ovalem Querschnitt. Die Querschnittsform eines Trinkgefäßes bzw. Trinkbehälters ist von geringerer Bedeutung, jedoch sind runde Querschnitte für Trinkgefäße bevorzugt.

PATENTANWÄLTE

Dipl.-Ing. H. MITSCHERLICH
Dipl.-Ing. K. GUNSCHMANN
Dipl.-Ing. Dr.rer.nat. W. KÖRBER
Dipl.-Ing. J. SCHMIDT-EVERS
Dipl.-Ing. W. MELZER

EUROPEAN PATENT ATTORNEYS

Telefon (089) 29 66 84 86
Telex 523 155 mitsh d
Telegramme Patentpaap
Telecopier (089) 29 39 63
Psch-Kto. Mchn. 195 75-803
EPA-Kto. 28 000 206

Steinsdorfstraße 10
D-8000 München 22

0169370

ROTPUNKT
Dr. Anso Zimmermann
Industriestraße

6434 Niederaula

ANSPRÜCHE

1. Gefäß zum Kühlen oder Warmhalten von im Gefäß aufzunehmendem Gut, insbesondere Speise- oder Trinkgefäß, bestehend aus einem topfförmigen, im wesentlichen formsteifen und aus wärmedämmendem Material oder in wärmedämmender Bauweise hergestellten Gehäuse mit einem oben offenen oder zu öffnenden Aufnahmeraum für das Gut und wenigstens einen Akku von im wesentlichen prismatischer Form,
dadurch gekennzeichnet,
daß im Aufnahmeraum (2,32) ein im wesentlichen formsteifer Behälter (3,25) für das Gut mit einem horizontalen Querschnitt angeordnet ist, der kleiner ist als der horizontale Querschnitt des Aufnahmeraums (2,32) und daß der Akku (5,34) im sich aufgrund des Querschnittunterschieds ergebenden Freiraum (6,33) angeordnet und durch den Behälter (3,25) formschlüssig fixiert ist.

2. Gefäß nach Anspruch 1,
dadurch gekennzeichnet,
daß die einander zugewandten Seitenwände des Akkus (5,34) und des Behälters (3,25) im wesentlichen ganzflächig aneinanderliegen.

3. Gefäß nach Anspruch 2,
dadurch gekennzeichnet,
daß der Akku (5) den Freiraum (6) ausfüllt.

4. Gefäß nach einem der Ansprüche 1 bis 3,
dadurch gekennzeichnet,
daß die dem Behälter zugewandte Seitenfläche des Akkus
eine vertikale Querschnittsfläche des Aufnahmeraums ist.

5. Gefäß nach einem der Ansprüche 1 bis 4,
dadurch gekennzeichnet,
daß der Behälter (3) als separates Bauteil in den
Aufnahmeraum (2) einsetzbar ist.

6. Gefäß nach Anspruch 5,
dadurch gekennzeichnet,
daß die Seitenwand des Aufnahmeraums (2) den Behälter (3) eng umschließt.

7. Gefäß nach einem der Ansprüche 1 bis 6,
dadurch gekennzeichnet,
daß die dem Akku (34) zugewandte Seitenwand (28) des
Behälters (25) einstückig an das Gehäuse (26) angeformt ist (Fig. 6).

8. Gefäß nach einem der Ansprüche 1 bis 7,
dadurch gekennzeichnet,
daß die dem Akku (5,34) zugewandte Seitenwand des
Behälters (3,25) eine von einer Ebene abweichende
Form hat, insbesondere gewölbt ist, und die dem
Behälter (3,25) zugewandte Seitenwand des Akkus (5,34)
eine entsprechend vor- oder zurückspringende, insbesondere konkave Anlagefläche (8) ist.

9. Gefäß nach einem der Ansprüche 1 bis 8,
dadurch gekennzeichnet,
daß der Behälter (3) im horizontalen Querschnitt
kreisrund oder oval ist.

1o. Gefäß nach einem der Ansprüche 1 bis 9,
dadurch gekennzeichnet,
daß die der Anlagefläche (8) entgegengesetzte Rückfläche (11) des Akkus (5) sowie die sich zwischen
diesen erstreckenden Seitenflächen (12) symmetrisch
zur Symmetrieebene (E) der Anlagefläche (8) angeordnet sind.

11. Gefäß nach einem der Ansprüche 1 bis 1o,
dadurch gekennzeichnet,
daß in dem Aufnahmeraum (2) wenigstens zwei einander
diametral oder wenigstens drei einander sternförmig
gegenüberliegende Behälter (3) angeordnet sind,
zwischen denen der Freiraum (6) besteht,und der Akku
(5) auf einander entgegengesetzten Seiten Anlageflächen (8) aufweist.

12. Gefäß nach Anspruch 11,
dadurch gekennzeichnet,
daß der Aufnahmeraum (2,32) im horizontalen Querschnitt die Form eines Langlochs aufweist, daß zwei
im horizontalen Querschnitt runde Behälter (3,25) bevorzugt gleichen Durchmessers (D) angeordnet sind,
und daß der Akku (5,34) auf einander entgegengestzten Seiten konkave Anlageflächen (8) aufweist.

13. Gefäß nach einem der Ansprüche 1 bis 12,
dadurch gekennzeichnet,
daß der Akku (5) aus zwei oder mehr identischen
Teilen besteht, die mit ihren Rückflächen (11) aneinanderliegend nebeneinander oder sternförmig angeordnet sind.

14. Gefäß nach einem der Ansprüche 1 bis 13,
    dadurch gekennzeichnet,
    daß sein Gehäuse (19) aus wärmedämmendem Kunststoff
    besteht oder aus Kunststoff besteht und innen und/oder
    außen durch wenigstens eine besondere Schicht wärmegedämmt ist.

15. Gefäß nach einem der Ansprüche 1 bis 14,
    dadurch gekennzeichnet,
    daß der Akku (5) an der Seite (14), die in seiner
    in das Gefäß (1) eingesetzten Stellung nach oben
    gerichtet ist, einen Griff, eine Griffausnehmung
    oder eine Griffkante oder dergleichen aufweist.

16. Gefäß nach einem der Ansprüche 1 bis 15,
    dadurch gekennzeichnet,
    daß der Akku (5) in seiner in das Gefäß (1) eingesetzten Stellung das Gefäß (1) und/oder den Behälter
    (3) überragt.

0169370

1/2

FIG.1

FIG.2

FIG.3

FIG.4

FIG.5

25 28 34 28 25

27
29
26

27

31 33

25 32 29 25

29

33 34

FIG.6

## EUROPÄISCHER RECHERCHENBERICHT

**0169370**
Nummer der Anmeldung

**EP 85 10 7514**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A- 453 321 (WALSH) <br><br> * Insgesamt * <br><br> --- | 1-6,8- 10 | A 47 J 41/00 <br> F 25 D 3/08 <br> A 45 C 11/20 |
| X | FR-A- 934 223 (SAVARY) <br> * Insgesamt * <br><br> --- | 1-6,11 | |
| X | BE-A- 509 654 (MANCINI) <br> * Insgesamt * <br><br> --- | 1-5,9 | |
| X | DE-B-1 782 624 (GULDEN STIFT N.V.) <br> * Insgesamt * <br><br> --- | 1,14- 16 | |
| X | US-A-4 292 817 (LOUCKS) <br> * Insgesamt * <br><br> --- | 1 | **RECHERCHIERTE SACHGEBIETE (Int. Cl.4)** |
| A | CH-A- 100 781 (REMOR) <br> * Insgesamt * <br><br> --- | 8-13 | A 47 J <br> A 47 G |
| A | FR-A-1 523 498 (RENDU) <br> * Figur 3 * <br><br> --- | 8-12 | A 45 C <br> F 25 D |
| A | GB-A-2 025 593 (WOLLSTEIN) <br><br> --- | | |
| A | DE-A-2 341 848 (DELBROUCK) <br><br> ---      -/- | | |

Der vorliegende Recherchenbericht wurde für alle Patentansprüche erstellt.

| Recherchenort | Abschlußdatum der Recherche | Prüfer |
|---|---|---|
| DEN HAAG | 24-09-1985 | SCHARTZ J. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 344 300 (TAYLOR) | | |
| A | US-A-2 724 494 (GRAFF) | | |
| A | US-A-2 496 296 (LOBL) | | |
| A | US-A-4 441 336 (CANNON) | | |
| A | FR-A-2 528 013 (TOMAC) | | |

RECHERCHIERTE SACHGEBIETE (Int. Cl 4)

Der vorliegende Recherchenbericht wurde für alle Patentansprüche erstellt.

| Recherchenort DEN HAAG | Abschlußdatum der Recherche 24-09-1985 | Prüfer SCHARTZ J. |
|---|---|---|